# EUROPEAN PATENT SPECIFICATION

(11) **EP 4 375 319 B1**
(45) Date of publication and mention of the grant of the patent: **12.08.2026**
(21) Application number: 22845811.3
(22) Date of filing: 11.07.2022
(51) Int. Cl.: C08J 11/08

(54) **METHOD FOR SEPARATING POLYARYLENE SULFIDE AND METHOD FOR PRODUCING POLYARYLENE SULFIDE RESIN COMPOSITION**
VERFAHREN ZUR TRENNUNG VON POLYARYLENSULFID UND VERFAHREN ZUR HERSTELLUNG EINER POLYARYLENSULFIDHARZZUSAMMENSETZUNG
PROCÉDÉ DE SÉPARATION DE SULFURE DE POLYARYLÈNE AINSI QUE PROCÉDÉ DE PRODUCTION DE COMPOSITION DE RÉSINE DE SULFURE DE POLYARYLÈNE

(30) Priority: 19.07.2021 JP 2021118379
(43) Date of publication of application: 29.05.2024
(73) Proprietor: Toray Industries, Inc., Tokyo 103-8666 (JP)
(72) Inventor: YAMANAKA, Yuji, Nagoya-shi, Aichi 455-8502 (JP); YARIMIZU, Ryosuke, Nagoya-shi, Aichi 455-8502 (JP); FUWA, Takuto, Nagoya-shi, Aichi 455-8502 (JP); UNOHARA, Takeshi, Otsu-shi, Shiga 520-8558 (JP); HORIUCHI, Shunsuke, Nagoya-shi, Aichi 455-8502 (JP)
(74) Representative: Mewburn Ellis LLP
(86) International application number: PCT/JP2022/027197
(87) International publication number: WO 2023/002877

(56) References cited:
- CN-A- 105 085 918
- CN-A- 109 485 913
- JP-A- 2004 131 602
- JP-A- 2009 269 369
- JP-A- H02 212 529
- JP-A- H10 507 223
- JP-A- H11 140 221
- US-A- 5 994 483

## Description

### Technical Field

The present invention relates to: a method of separating a polyarylene sulfide from a polyarylene sulfide resin composition or a molded article thereof; and a method of producing a polyarylene sulfide resin composition.

### Background Art

Polyphenylene sulfide (hereinafter, may be abbreviated as "PPS") resins are engineering plastics having excellent heat resistance, chemical resistance, flame retardancy, and electrical properties, and have been used as resin compositions containing a filler such as glass fibers or carbon fibers and additives such as an elastomer, mainly in automotive parts, water-related parts, and electrical/electronic parts.

In recent years, recycling of thermoplastic resins recovered after use in the market has been accelerated toward realization of circular economy. PPS resins are suitable for material recycling because of their excellent durability; however, many of them are distributed in the market as glass fiber-reinforced PPS resin compositions, presenting a problem that they cannot be utilized as highly versatile recycling resources.

In addition, since molded articles that are recovered after use in the market have dust and oily stain components adhering thereto, there is a problem that not only the mechanical properties are likely to be deteriorated but also odor and mold contamination occur due to such stain components during molding and use of the molded articles, and this limits the use in recycling.

Therefore, it is demanded to separate and recover a PPS from a PPS resin composition containing contaminants by a technology that is excellent also in terms of life cycle assessment (hereinafter, referred to as "LCA") based on a low resource consumption and a low energy consumption.

As a method of recovering and reusing a resin and fibers from a resin composition, there is disclosed a method of hydrolyzing a fiber-reinforced plastic with supercritical or subcritical water to separate and recover a resin and fibers (e.g., Patent Literature 1). Further, a method of depolymerizing a polyarylene thioether by an action of an alkali metal sulfide and subsequently separating and recovering a resin and fibers has been disclosed (e.g., Patent Literature 2). Moreover, a method of recovering a PAS by dissolving a polymer blend containing the PAS and glass fibers in a solvent and subsequently performing reprecipitation in a liquid medium has been disclosed (e.g., Patent Literature 3). Patent Literature 4 describes a synthesis method of a polyphenyl thioether material by adding aromatic compounds as a solvent. Patent Literature 5 describes a method of manufacturing a molding in which a ratio of a regenerated fiber-like filling material-reinforced polyphenylene sulfide composition used as a material in the molding is increased.

### Citation List

### Patent Literature

Patent Literature 1: JP H10-87872A (Claims and Examples)
Patent Literature 2: JP H04-007334A (Claims and Examples)
Patent Literature 3: JP H11-140221A (Claims and Examples)
Patent Literature 4: CN 105 085 918 A
Patent Literature 5: JP 2009 269369 A

### Summary of Invention

### Technical Problem

However, in the method of Patent Literature 1, hydrolysis is performed in a ultrahigh temperature condition of 300 to 500°C; therefore, this method has a problem of requiring a large energy load and thus being poor in terms of LCA. In addition, there is no disclosure regarding the type of the plastic, and the method is not applicable to a PPS that is composed of non-hydrolyzable bond groups. In the method of Patent Literature 2, a PAS is depolymerized in a polar organic solvent to roughly a molecular weight of an oligomer and, for recycling of the PAS, a new resource is consumed and an energy load is generated by repolymerization; therefore, this method has a problem of being poor in terms of LCA. There is also a problem that a PAS oligomer has excellent solubility in polar organic solvents and thus rather makes the separation from low-molecular-weight contaminants and the like difficult. In the method of Patent Literature 3, a large amount of solvent is required for recovering a PAS by reprecipitation; therefore, this method has a problem of being poor in terms of LCA.

### Solution to Problem

In order to solve the above-described problems, the method of separating a polyarylene sulfide according to the present invention is configured as follows. That is, the method of separating a polyarylene sulfide (hereinafter, referred to as "PAS") according to the present invention includes performing the following steps 1 to 4:
step 1: the step of heating a PAS resin composition or a molded article thereof to a temperature of 200°C or higher and 400°C or lower in a polar organic solvent to dissolve the PAS and thereby obtain a PAS solution (A), wherein the polar organic solvent is NMP;
step 2: the step of separating the PAS solution (A) into a solid and a PAS solution (B) by solid-liquid separation;
step 3: the step of cooling the PAS solution (B) obtained in the step 2 to a temperature of 20°C or higher and 200°C or lower to allow deposition of the PAS; and
step 4: the step of performing solid-liquid separation of a mixture obtained in the step 3 to separate the PAS.

In the method of separating a polyarylene sulfide according to the present invention, the PAS resin composition or the molded article thereof in the step 1 preferably contains at least one selected from an inorganic filler and an organic filler.

In the method of separating a polyarylene sulfide according to the present invention, the molded article of the PAS resin composition in the step 1 is preferably a molded article recovered after use as a product.

In the method of separating a polyarylene sulfide according to the present invention, the polar organic solvent in the step 1 is NMP.

In the method of separating a polyarylene sulfide according to the present invention, the deposition in the step 3 is preferably performed at 50°C or higher and 150°C or lower.

In the method of separating a polyarylene sulfide according to the present invention, the PAS contained in the PAS resin composition or the molded article thereof prior to the dissolution in the step 1 preferably has a weight average molecular weight (hereinafter, referred to as "Mw") of 10,000 or more and 60,000 or less.

In the method of separating a polyarylene sulfide according to the present invention, the steps 1 to 4 are preferably partially or entirely performed by a continuous method.

In the method of separating a polyarylene sulfide according to the present invention, the Mw of the PAS contained in the PAS resin composition or the molded article thereof prior to the dissolution in the step 1 is preferably reduced to 10,000 or more and 60,000 or less in the step 1.

In the method of separating a polyarylene sulfide according to the present invention, a sulfur compound is preferably added to the solution in the step 1.

In the method of separating a polyarylene sulfide according to the present invention, the sulfur compound is preferably at least one compound selected from an alkali metal sulfide, an alkali metal hydrosulfide, and hydrogen sulfide.

The method of separating a polyarylene sulfide according to the present invention preferably includes washing and recovering the separated PAS after the step 4.

Further, the method of producing a polyarylene sulfide resin composition according to the present invention is configured as follows. That is, the method of producing a polyarylene sulfide resin composition according to the present invention is a method of producing a PAS resin composition in which a PAS obtained by the above-described separation method of washing and recovering a separated PAS after the step 4 is used as a raw material.

### Advantageous Effects of Invention

According to the present invention, a PAS can be recovered from a PAS resin composition or a molded article thereof in a reasonable manner in terms of LCA. Description of Embodiments

The PAS contained in the PAS resin composition or the molded article thereof that is used in the present invention is a homopolymer or copolymer containing a repeating unit of formula -(Ar-S)- as a main structural unit. The phrase "containing ... as a main structural unit" used herein means that the homopolymer or copolymer contains the repeating unit in an amount of 80 mole % or more of all structural units constituting the PAS. Examples of Ar include units represented by the following Formulae (A) to (K), among which a unit represented by Formula (A) is particularly preferred.

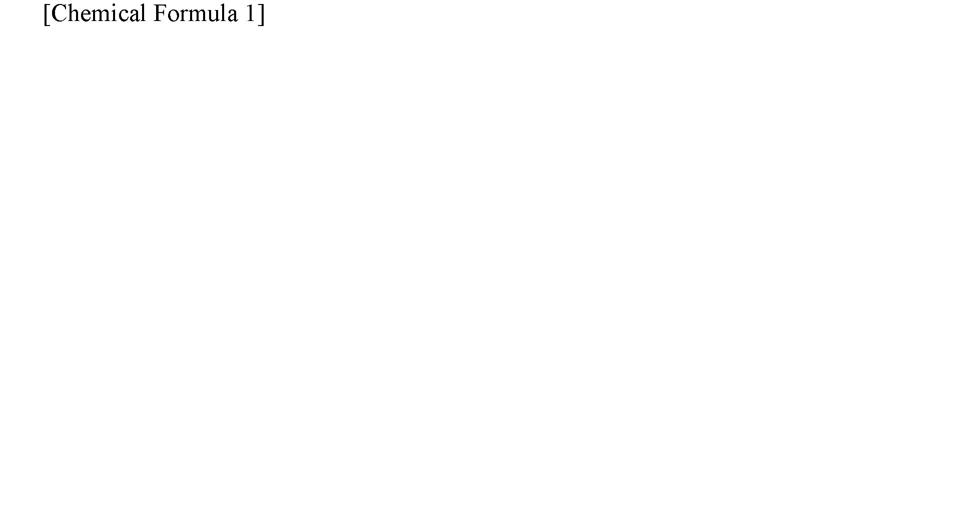

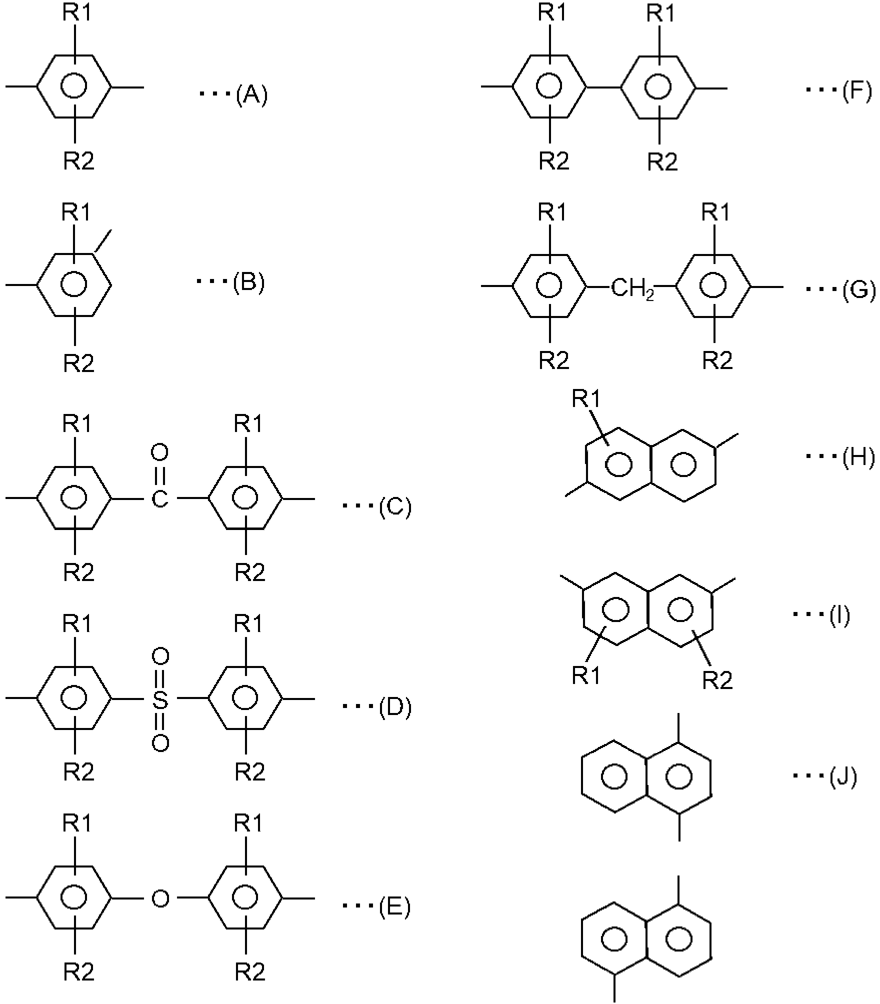

R1 and R2 each represent a substituent selected from a hydrogen atom, an alkyl group, an alkoxy group, a halogen group, and a carboxyl group, and R1 and R2 may be the same or different.

As long as the above-described repeating unit is a main structural unit, a small amount of a branching or crosslinking unit represented by any of the following Formulae (L) to (N) can be contained. The amount of copolymerization of the branching or crosslinking unit is preferably in a range of 0 to 1 mole % with respect to 1 mol of the unit -(Ar-S)-.

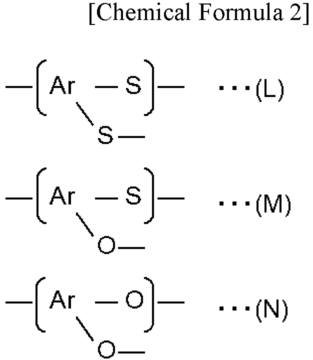

As a repeating unit of the PAS, ap-arylene sulfide unit of Formula (A) is contained in an amount of preferably 90 mole % or more, more preferably 95 mole % or more, still more preferably 98 mole % or more. When the amount of this p-arylene sulfide unit is less than 90 mole %, i.e. when an o-arylene sulfide unit and an m-arylene sulfide unit are contained in a large amount, not only the intrinsically high melting point of the PAS is lowered, but also the mechanical properties tend to be deteriorated.

Representative examples of the PAS include a polyphenylene sulfide, a polyphenylene sulfide sulfone, a polyphenylene sulfide ether, a polyphenylene sulfide ketone, and random copolymers and block copolymers thereof, as well as mixtures thereof. Examples of a particularly preferred PAS include a polyphenylene sulfide (hereinafter also referred to as "PPS") that contains 90 mole % or more, preferably 95 mole % or more, more preferably 98 mole % or more, of the following p-phenylene sulfide unit as a polymer main structural unit.

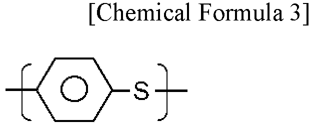

As the PAS, a PAS obtained by a known method, such as a method of performing desalting and polycondensation of a dihalogenated aromatic compound with a sulfidizing agent in a polar organic solvent or a method of synthesizing a PAS under melting conditions using diiodobenzene and sulfur, can be used. When the PAS resin composition is used as a molded article, excellent heat resistance and chemical resistance are required; therefore, the PAS contained in the PAS resin composition or the molded article thereof preferably has a melting point of 230°C or higher and lower than 320°C and, with regard to a PPS in which the arylene unit is a phenylene unit, a lower limit of the melting point is generally 250°C or higher while an upper limit is lower than 300°C. From the standpoint of strength and toughness, the weight average molecular weight of the PAS is preferably 10,000 or more, more preferably 15,000 or more. Particularly, from the standpoint of reducing the solubility in a polar organic solvent to improve the separability from low-molecular-weight components such as contaminants, the weight average molecular weight of the PAS is still more preferably 20,000 or more. On the other hand, when the molecular weight of the PAS is excessively high, in the step 1 of the present invention in which a PAS resin composition or a molded article thereof is dissolved in a polar organic solvent, the PAS is hardly dissolved in the polar organic solvent and the recovery efficiency is thus reduced; therefore, the weight average molecular weight of the PAS contained in the PAS resin composition or the molded article thereof is preferably less than 200,000, more preferably less than 100,000. Especially, from the standpoint of increasing the solubility in the polar organic solvent to lower the heating temperature and thereby reduce the energy load, the weight average molecular weight of the PAS is still more preferably less than 80,000, particularly preferably less than 60,000.

The PAS resin composition, the molded article, the polar organic solvent, the step 1, the step 2, the step 3, the step 4, and a recovered material will now be described one by one.

### [PAS Resin Composition]

The PAS resin composition is obtained by adding additives such as a filler to a PAS, heating the resultant to a temperature equal to or higher than the melting point of the PAS, and then melt-kneading the resultant. In order to allow the resulting PAS resin composition to exhibit excellent properties, an inorganic filler or an organic filler is generally used as the filler.

Examples of the inorganic filler include: fibrous inorganic fillers, such as glass fibers, glass milled fibers, carbon fibers, potassium titanate whiskers, zinc oxide whiskers, calcium carbonate whiskers, wollastonite whiskers, aluminum borate whiskers, alumina fibers, silicon carbide fibers, ceramic fibers, plaster fibers, metal fibers, and basalt fibers; and non-fibrous inorganic fillers, such as talc, wollastonite, zeolite, sericite, mica, kaolin, clay, isinglass, ferrite, pyrophyllite, bentonite, alumina silicate, silicon oxide, magnesium oxide, alumina, zirconium oxide, titanium oxide, iron oxide, magnesium oxide, calcium carbonate, magnesium carbonate, dolomite, calcium sulfate, barium sulfate, calcium hydroxide, magnesium hydroxide, aluminum hydroxide, glass beads, glass flakes, glass powder, ceramic beads, boron nitride, silicon nitride, silicon carbide, aluminum silicate, calcium silicate, silica, graphite, carbon black, and graphite.

Examples of the organic filler include: fibrous organic fillers, such as polyethylene fibers, polypropylene fibers, polyester fibers, polyamide fibers, polyaramid fibers, fluororesin fibers, thermosetting resin fibers, epoxy resin fibers, polyvinylidene chloride fibers, polyvinylidene fluoride fibers, and cellulose fibers; and non-fibrous organic fillers, such as ebonite powder, cork powder, and wood flour.

These fillers may be used after being pretreated with a coupling agent, such as an isocyanate compound, an organosilane compound, an organotitanate compound, an organoborane compound, or an epoxy compound. A sizing agent may be used as well.

In the PAS resin composition, an olefin copolymer resin is also generally used for the purposes of, for example, improving the toughness, and examples thereof include: olefin copolymer resins having at least one functional group selected from the group consisting of an epoxy group, a carboxyl group, an acid anhydride group, an amino group, a hydroxy group, and a mercapto group; and olefin copolymers having none of the above-described functional groups.

In the PAS resin composition, for the purpose of improving other properties, the following additives may be used as well: resins other than the olefin copolymer resin, such as polyamide, polyether sulfone, polysulfone, polyaryl sulfone, polyether imide, polyphenylene ether, fluororesin, and polyether ether ketone; coupling agents, such as epoxy compounds, amine compounds, isocyanate compounds, and anhydride compounds; phenol-based and phosphorus-based antioxidants; anti-coloring agents, such as hypophosphites; crystal nucleating agents, such as talc, kaolin, organophosphorus compounds, and polyether ether ketone; mold release agents, such as ethylenediamine-stearic acid-sebacic acid polycondensates and silicone compounds; flame retardants, such as phosphorus-based, bromine-based, and silicone-based flame retardants; and blackening agents such as carbon.

### [Molded Article of PAS Resin Composition]

In various members of automobiles, electrical/electronic components, housing equipment, and the like, the PAS resin composition is molded into a desired shape by, for example, injection molding, extrusion molding, or compression molding. For molding these molded articles, various molding methods such as molding of a resin by itself, insert molding that forms a composite of a resin and a metal, and two-color molding that forms a composite of a resin and other resin are employed, and the molded article used in the present invention is not particularly limited to be produced by any of these molding methods. It is also possible to use a molded article that is obtained by employing any of various bonding methods, for example, weld-bonding such as laser welding, hot plate welding, IR welding, or vibration welding, or bonding with an adhesive. Further, not only a molded article obtained by the above-described molding, but also fibers or a film composed of PAS, or a complex thereof can be used as well.

The molded article used in the present invention may be a defective molded article generated during molding, a non-standard molded article, or a scrap molded article such as a sprue or a runner, and may contain other polymer, such as polyolefin or PET, that is generated during purging at the time of switching raw materials. From the standpoint of realizing a circular economy, the molded article used in the present invention is preferably a molded article that has been used as a product in the market and then recovered. It is also a preferred mode to, for example, sort and wash the molded article recovered from the market as appropriate. Molded articles recovered from the market are often found with oil strains and the like adhering thereto; however, according to the present invention, the molded articles can be reasonably from such contaminants and the like in a reasonable manner in terms of LCA.

These molded articles are preferably fragmented so as to improve the efficiency of the sorting and the washing and to improve the solubility in a polar organic solvent in the step 1. Examples of a fragmentation method include compression crushing, impact crushing, shear crushing, cutter crushing, mill crushing, and cutting, and the fragmentation method is not particularly limited as long as the object of the present invention is achieved. The size of the resulting fragments is preferably 50 mm or less and, from the standpoint of solubility, it is more preferably 20 mm or less. Further, the fragmented molded article can be re-pelletized by any known method in which the fragments are melt-kneaded using an extruder or the like.

### [Polar Organic Solvent]

As the polar organic solvent used for dissolving the PAS resin composition or the molded article thereof, N-methyl-2-pyrrolidone (hereinafter, referred to as "NMP") is used from the standpoint of the ease of controlling the solubility based on the weight average molecular weight of the PAS and the standpoint of the miscibility with water.

### [Step 1]

In the step 1, the PAS resin composition or the molded article thereof is heated to a temperature of 200°C or higher and lower than 400°C in a polar organic solvent to dissolve the PAS and thereby obtain a PAS solution (A), wherein the polar organic solvent is NMP. From the standpoint of sufficiently dissolving the PAS to improve the recovery ratio of the PAS, the temperature is preferably 220°C or higher, more preferably 240°C or higher. Meanwhile, from the standpoint of energy saving, the temperature is preferably lower than 300°C, more preferably lower than 270°C, which is equal to or lower than the melting point of the PAS.

A weight ratio between the PAS resin composition or the molded article thereof and the polar organic solvent in the step 1 cannot be generally specified since it varies depending on the weight average molecular weight of the PAS; however, the weight of a PPS contained in the PAS resin composition or the molded article thereof per 1 kg of the polar organic solvent is preferably 20 g or more, more preferably 50 g or more and, from the standpoint of improving the production efficiency, it is still more preferably 100 g or more. An upper limit of this weight is preferably 500 g or less, more preferably 300 g or less, and, from the standpoint of sufficiently dissolving the PAS, it is still more preferably 200 g or less, particularly preferably 150 g or less.

The heating time for dissolving the PAS resin composition or the molded article thereof in the step 1 is not particularly limited as long as the PAS resin composition or the molded article thereof is dissolved, and it may be, for example, 5 minutes or longer and 5 hours or shorter. From the standpoint of productivity and LCA, an upper limit of the heating time is preferably 3 hours or shorter, more preferably 2 hours or shorter, still more preferably 1 hour or shorter.

For the process of the step 1, various known reaction methods, such as a batchwise method and a continuous method, can be selected. For example, in the batchwise method, any of an autoclave, a vertical or horizontal reactor, and the like, which are all equipped with a stirrer and a heating function, may be used. In the continuous method, for example, any of an extruder, a flow reactor (e.g., the flow reactor described in WO 2019/031435), a tube reactor, a line mixer, a vertical or horizontal reactor, and a tower, which are all equipped with a heating function, may be used. In the batchwise method, a heatup time is required in addition to the above-described heating time; therefore, it is preferred to employ a continuous method from the standpoint of productivity and LCA.

In order to not only dissolve the PAS resin composition or the molded article thereof at such preferred temperature and weight ratio with the preferred heating time but also improve the efficiency of the separation in the steps 2 to 4 thereby achieving both satisfactory recovery ratio and satisfactory separability of the PAS, the weight average molecular weight of the PAS is preferably in an appropriate range, and a lower limit thereof is preferably 10,000 or more, more preferably 20,000 or more, still more preferably 30,000 or more, while an upper limit thereof is preferably 60,000 or less.

In order to achieve both satisfactory yield and satisfactory separability of a recovered PPS, it is also a preferred mode to, as appropriate, reduce the weight average molecular weight of the PAS to the above-described preferred range at the time of dissolving the PAS resin composition or the molded article thereof in the polar organic solvent in the step 1.

As a method of reducing the molecular weight of the PAS, it is preferred to add a sulfur compound to a solution in which the PAS resin composition or the molded article thereof is dissolved. As the sulfur compound, it is preferred to use at least one compound selected from an alkali metal sulfide, an alkali metal hydrosulfide, and hydrogen sulfide.

Specific examples of the alkali metal sulfide include lithium sulfide, sodium sulfide, potassium sulfide, rubidium sulfide, cesium sulfide, and mixtures of two or more of these sulfides, among which lithium sulfide and/or sodium sulfide is/are preferably used, and sodium sulfide is more preferably used. These alkali metal sulfides can be used as hydrates or aqueous mixtures, or in the form of anhydrides. The term "aqueous mixture" used herein refers to an aqueous solution, a mixture of an aqueous solution and a solid component, or a mixture of water and a solid component. Commonly available and inexpensive alkali metal sulfides are hydrates or aqueous mixtures; therefore, it is preferred to use an alkali metal sulfide in such a form.

Specific examples of the alkali metal hydrosulfide include lithium hydrosulfide, sodium hydrosulfide, potassium hydrosulfide, lithium hydrosulfide, rubidium hydrosulfide, cesium hydrosulfide, and mixtures of two or more of these hydrosulfides, among which lithium hydrosulfide and/or sodium hydrosulfide is/are preferably used, and sodium hydrosulfide is more preferably used.

An alkali metal sulfide prepared from an alkali metal hydrosulfide and an alkali metal hydroxide in the reaction system can be used as well. Alternatively, an alkali metal sulfide that is prepared in advance by bringing an alkali metal hydrosulfide and an alkali metal hydroxide into contact with each other can be used. These alkali metal hydrosulfide and alkali metal hydroxide can be used as hydrates or aqueous mixtures, or in the form of anhydrides, and hydrates or aqueous mixtures are preferred from the standpoint of availability and cost.

Further, an alkali metal sulfide that is prepared from an alkali metal hydroxide, such as lithium hydroxide or sodium hydroxide, and hydrogen sulfide in the reaction system can be used as well. Alternatively, an alkali metal sulfide that is prepared in advance by bringing an alkali metal hydroxide, such as lithium hydroxide or sodium hydroxide, and hydrogen sulfide into contact with each other can be used.

The amount of the sulfur compound to be used is, in terms of its sulfur component, preferably 0.01 mole % or more, more preferably 0.1 mole % or more, still more preferably 1.0 mole % or more, per 1.0 mol of the PAS. An upper limit of this amount is preferably 50 mole % or less, more preferably 10 mole % or less. By allowing the sulfur compound to react at a low concentration in this manner, the weight average molecular weight of the PAS can be adjusted to be in a preferred range without being excessively reduced under the dissolution conditions of the step 1. At an amount of 0.01 mole % or more, the sulfur compound is not excessively dilute, and the molecular weight of the PAS can be efficiently adjusted. By controlling the amount of the sulfur compound to be used at 50 mole % or less, an excessive progress of depolymerization can be inhibited. It is noted here that the content of the PAS in the PAS resin composition or the molded article thereof is determined by subtracting the amount of added compounding agents, such as a filler and an elastomer, from the amount of the PAS resin composition or the molded article thereof.

When the sulfur compound is an alkali metal hydrosulfide, the amount of an alkali metal hydroxide to be used is, in terms of the hydroxide ion of the alkali metal hydroxide, preferably in a range of 0.95 mol or more and 2.5 mol or less per 1 mol of the sulfur component of the alkali metal hydrosulfide. In this preferred range, a thermally unstable low-molecular-weight PAS is unlikely to be generated, and a low-molecular-weight PAS containing a large amount of impurities is also unlikely to be generated. Therefore, a lower limit of the amount of the hydroxide ion of the alkali metal hydroxide is preferably 1.0 mol or more, more preferably 1.1 mol or more, per 1 mol of the sulfur component of the alkali metal hydrosulfide. An upper limit is preferably 2.0 mol or less, more preferably 1.8 mol or less.

In the step 1, from the standpoint of increasing the solubility in the polar organic solvent to improve the productivity, the degree of crystallinity of the PAS resin composition or the molded article thereof is preferably 30% or lower, more preferably 20% or lower, still more preferably 10% or lower. In order to obtain a PAS resin composition having such a degree of crystallinity, specifically, for example, a strand obtained by melt-kneading a PAS resin composition or a molded article thereof may be rapidly cooled and annealed prior to the step 1. It is noted here that the degree of crystallinity is a value in percentage (%) that is calculated by dividing a value obtained by subtracting the cold crystallization calorific value (J/g) from the melting calorific value (J/g) of the PAS, which values are detected at the time of heatup from 0°C to 340°C at a rate of 20°C/min using a differential scanning calorimeter, by the complete crystallization calorific value of the PAS (146.2 (J/g) in the case of PPS).

### [Step 2]

In the step 2 of the present invention, solid-liquid separation is performed to separate the PAS solution (A) obtained in the step 1 into a solid that is an insoluble component, and a PAS solution (B). A method of performing this solid-liquid separation is not particularly limited, and any known method, examples of which include pressurized filtration and vacuum filtration that are filtration methods using a filter, precipitation separation and centrifugal separation that are separation methods based on a difference in specific gravity between a solid content and a solution, and a combination of these methods, can be employed. A decanter separation method in which precipitation separation is performed prior to a filtration operation is also a preferred method.

Examples of the solid separated in the step 2 include; components that are insolubilized as a result of oxidative crosslinking and the like of the inorganic filler, the organic filler, the olefin copolymer resin, the PAS, and the like, as well as metals, dust, dirt, and rust.

The solid-liquid separation temperature in the step 2 is preferably 200°C or higher and lower than 400°C as in the step 1. From the standpoint of productivity, the solid-liquid separation temperature is preferably equal to or higher than the heating temperature in the step 1 and, from the standpoint of sufficiently dissolving the PAS to improve the recovery ratio of the PAS, it is more preferably 220°C or higher, still more preferably 240°C or higher. Meanwhile, from the standpoint of energy saving, the solid-liquid separation temperature is more preferably lower than 300°C, still more preferably lower than 270°C, which is equal to or lower than the melting point of the PAS. It is also possible to use a supercooled state to perform a solid-liquid separation treatment at a temperature equal to or lower than the heating temperature of the step 1 while inhibiting the deposition of the PAS from the PAS solution (A). In this case, the solid-liquid separation treatment temperature is preferably 100°C or higher and, from the standpoint of the balance with solubility, it is more preferably 150°C or higher.

From the standpoint of inhibiting oxidative crosslinking and modification of the PAS, the solid-liquid separation of the step 2 is preferably performed in a non-oxidizing atmosphere, and this non-oxidizing atmosphere is preferably, for example, an inert gas such as nitrogen, helium, or argon. Particularly, when the weight average molecular weight of the PAS is adjusted with a sulfur compound in the step 1, a terminal of the PAS forms a thiolate structure that is likely to be affected by oxidation; therefore, in order to maintain the recovered PAS in a high-quality state, it is effective to perform the solid-liquid separation in a non-oxidizing atmosphere.

In the case of performing the process of the step 2 by a batchwise method, for example, a process of discharging and recovering a solution from an apparatus that is equipped with a filtration device connected to a lower part of a discharge section of a batch dissolving tank, or a batch dissolving tank itself, and filtering the solution using a filtration device in another step may be selected. Alternatively, in the case of performing the process of the step 2 by a continuous method, for example, a process of arranging a filtration device in the middle of a continuous dissolution apparatus such as a flow reactor, or a process of performing precipitation separation or filtration separation using a decanter-type continuous centrifuge provided in the downstream of a continuous dissolution apparatus may be selected. Residues deposited in these filtration devices, such as a filler, can be recovered by a batchwise method or a continuous method.

Further, from the standpoint of effective utilization of materials, it is also preferred to recover a filler separated in the step 2, and it is preferred to recover at least one selected from an inorganic filler and an organic filler as the filler. As for the inorganic filler and/or the organic filler recovered by the solid-liquid separation in the step 2, a solution containing the PAS and an organic solvent is adhered to the filler surface; therefore, for example, a method of recovering the filler by heating the filler having the PAS and the polar organic solvent adhered thereto to a high temperature of about 500°C and thereby volatilizing and burning organic materials, or a method of recovering the filler by washing it with a solvent compatible with the polar organic solvent used in the step 1 may be selected. The washing conditions are not particularly limited, and the washing amount, the number of washing operations, and the washing temperature may be set as appropriate such that the PAS and the polar organic solvent can be removed from the inorganic filler and the organic filler. Further, washing with the polar organic solvent may be followed by replacement with water or the like as appropriate.

### [Step 3]

In the step 3 of the present invention, the PAS solution (B) obtained in the step 2 is cooled to 20°C or higher and 200°C or lower to allow deposition of the PAS. By performing solid-liquid separation in the same polar organic solvent while changing the temperature in a stepwise manner from the step 1 to the step 3, the PAS can be recovered from a PPS resin composition or a molded article thereof, which contains contaminants and the like, in a reasonable manner in terms of LCA.

The deposition temperature in the step 3 is preferably adjusted in accordance with the components other than the PAS that are contained in the PAS solution (B). As the deposition temperature is increased, the amount of the components dissolved in the polar organic solvent is increased, and the separability of PAS is thus improved; however, the recovery ratio is reduced since a low-molecular-weight PAS can no longer be recovered. From the standpoint of separating contaminant components, low-molecular-weight components derived from the olefin copolymer resin, and the like, the deposition temperature is preferably 50°C or higher and, from the standpoint of separating an oligomer derived from the PAS, the deposition temperature is preferably 100°C or higher. By improving the separability of low-molecular-weight components, the generation of gas during a melting process of the recovered PAS is inhibited, so that not only the quality of a film, fibers, and the like can be improved, but also contamination of a mold during molding can be prevented. From the standpoint of improving the recovery ratio of the PAS, an upper limit of the deposition temperature is more preferably 150°C or lower.

As long as the step 3 is performed in the above-described temperature range, in order to achieve both satisfactory recovery ratio and satisfactory separability of the PAS, any of the following methods may be selected: a method of performing cooling at a constant temperature; a method of lowering the temperature in a stepwise manner; and a method of lowering the temperature in a continuous manner, and the particle size of the resulting PAS particles may be adjusted by controlling the cooling rate.

As long as the step 3 is performed in the above-described temperature range, in order to achieve both satisfactory recovery ratio and satisfactory separability of the PAS, a substance that improves the efficiency of the deposition of the PAS may be added, and this substance is preferably water from the standpoint of LCA and cost.

The deposition time in the step 3 is not particularly limited as long as the PAS is deposited from the PAS solution (B), and it may be, for example, 5 minutes or longer and 24 hours or shorter. From the standpoint of productivity and LCA, an upper limit of the deposition time is preferably 12 hours or shorter, more preferably 6 hours or shorter.

For the process of the step 3, various known reaction methods, such as a batchwise method and a continuous method, can be selected. For example, in the batchwise method, any of an autoclave, a vertical or horizontal reactor, a tank, and the like, which are all equipped with a stirrer and a heating function, may be used. In the continuous method, for example, any of an extruder, a flow reactor, a tube reactor, a line mixer, a vertical or horizontal reactor, and a tower, which are all equipped with a heating function, may be used.

### [Step 4]

In the step 4 of the present invention, solid-liquid separation of a mixture containing the PAS deposited in the step 3 into the PAS and the polar organic solvent containing contaminants and the like is performed. A method of performing this solid-liquid separation is not particularly limited, and any known method, examples of which include pressurized filtration and vacuum filtration that are filtration methods using a filter, precipitation separation and centrifugal separation that are separation methods based on a difference in specific gravity between a solid content and a solution, and a combination of these methods, can be selected. A decanter separation method in which precipitation separation is performed prior to a filtration operation is also a preferred method.

The solid-liquid separation temperature in the step 4 is preferably 20°C or higher and 200°C or lower as in the step 3 and, from the standpoint of productivity, the solid-liquid separation temperature is preferably the same as the deposition temperature of the step 3. Meanwhile, it is also possible to use a supercooled state to perform the solid-liquid separation at a temperature equal to or lower than the deposition temperature of the step 3 while inhibiting the deposition of components other than the PAS from the mixture obtained in the step 3.

In the step 4, a washing solvent is preferably added as appropriate so as to improve the ease of handling of the mixture and perform washing of the PAS. The washing solvent is not particularly limited; however, washing with an organic solvent has a problem in that it removes oligomer components contained in the PAS and thus reduces the yield of recovered PAS; therefore, from the standpoint of efficiently recovering the PAS, washing with water is preferred. The conditions for the washing with water are not particularly limited, and the amount of water, the number of washing operations, and the washing temperature may be set as appropriate such that the polar organic solvent can be removed from the PAS. Particularly, when the weight average molecular weight of the PAS is adjusted by developing the sulfur compound in the step 1, the washing is preferably performed with water from the standpoint of washing the resulting reaction product such as a salt. As for the timing of adding the washing solvent, the washing solvent may be added before or after the solid-liquid separation of the mixture obtained in the step 3.

### [Recovered Material]

The PAS recovered in the present invention can be reused without the need to newly add a resource by repolymerization or the like or to consume a large amount of energy and, by processing the PAS into a film, fibers, or a resin, or by melt-kneading the PAS with compounding materials, the PAS can be recycled as a PAS resin composition or a molded article thereof, and is expected to be utilized as an environmentally-friendly material in various applications, including automobiles, electrical/electronic components, housing equipment, and the like. In order to allow sufficient physical properties to be expressed in these applications, the weight average molecular weight of the recovered PAS is preferably 10,000 or more and 60,000 or less, more preferably 20,000 or more.

As long as there is no problem in terms of LCA, the PAS recovered in the present invention can also be recovered as a PAS having an increase molecular weight through repolymerization using a dihalogenated aromatic compound and a sulfide compound along with the recovered low-molecular-weight PAS as raw materials.

Further, the inorganic filler and the organic filler that are separated and recovered in the step 2 of the present invention can be recycled as fillers of various resin compositions.

### Examples

The method of the present invention will now be described more concretely by way of Examples and Comparative Examples; however, the present invention is not limited only to the below-described Examples. Measurement methods are as follows.

### (1) Analysis of Weight Average Molecular Weight

The weight average molecular weight (Mw) was calculated in terms of polystyrene based on gel permeation chromatography (GPC). The measurement conditions of GPC are shown below.
Apparatus: SSC-7100 (manufactured by Senshu Scientific Co., Ltd.)
Column name: GPC3506 (manufactured by Senshu Scientific Co., Ltd.)
Eluent: 1-chloronaphthalene
Detector: differential refractive index detector
Column temperature and detector temperature: 210°C
Flow rate: 1.0 mL/min
Sample concentration: 0.2 weight % (solvent: 1-chloronaphthalene)

### (2) Amount of Generated Gas

A PPS recovered in each of Examples and Comparative Examples was weighed in an amount of 10 g in an aluminum cup, treated for 2 hours in a hot air dryer (PHH202, manufactured by ESPEC Corp.) that was heated to 320°C, and then cooled at room temperature. Subsequently, the weight was measured, and the weight reduction rate (%), which is a ratio of change in weight before and after the drying treatment with respect to the weight before the drying treatment, was determined and defined as the amount of gas generated.

### (3) Mechanical Properties

For an ISO (1A) dumbbell test piece, using an AUTOGRAPH tester AG-Xplus 20kN at 23°C, the tensile properties were evaluated in accordance with ISO527-1 (2012) and ISO527-2 (2012) under the following conditions: support distance = 114 mm, tensile rate = 5 mm/min.

Subsequently, the flexural properties were evaluated in accordance with ISO178 (2010) under the following conditions: support distance = 64 mm, rate = 2 mm/min.

Thereafter, using a test piece obtained by cutting an ISO (1A) dumbbell, the notched Charpy impact strength was evaluated in accordance with ISO179 (2010).

### [Reference Example 1] Preparation of PPS-1

To a 70 L autoclave equipped with a stirrer and a bottom stop valve, 8.3 kg (70.0 mol) of 47.5% sodium hydrosulfide, 2.9 kg (69.8 mol) of 96% sodium hydroxide, 11.5 kg (115.5 mol) of N-methyl-2-pyrrolidone (NMP), 1.9 kg (23.1 mol) of sodium acetate, and 10.5 kg of ion exchanged water were added, and these materials were slowly heated to 245°C over a period of about 3 hours under normal pressure in a nitrogen stream. After 14.8 kg of water and 0.3 kg of NMP were removed by distillation, the reaction vessel was cooled to 200°C. The amount of dispersed hydrogen sulfide was 0.02 mol per 1 mol of the added alkali metal sulfide.

Subsequently, 10.5 kg (71.1 mol) ofp-dichlorobenzene and 9.4 kg (94.5 mol) of NMP were added, and the reaction vessel was hermetically sealed under nitrogen gas and then heated from 200°C to 270°C at a rate of 0.6°C/min with stirring at 240 rpm. After the materials were allowed to react at 270°C for 100 minutes, the bottom stop valve of the autoclave was opened to flush the contents with pressurized nitrogen into a vessel equipped with a stirrer, and most of NMP was removed at 250°C.

The resulting solid and 76 L of ion exchanged water were put into an autoclave equipped with a stirrer, and the solid was washed at 70°C for 30 minutes, followed by suction-filtration through a glass filter. Subsequently, 76 L of ion exchanged water heated to 70°C was poured onto the glass filter and suction-filtered to obtain a cake.

The thus obtained cake and 90 L of ion exchanged water were added to an autoclave equipped with a stirrer, and acetic acid was further added to adjust the pH to 7, after which the autoclave was heated to 195°C and maintained for 30 minutes. Thereafter, the contents were filtered through a glass filter, and the thus recovered cake was dried at 120°C under a nitrogen stream, whereby a dry PPS (PPS-1) having a weight average molecular weight of 42,000 was obtained.

### [Reference Example 2] Molded Article (PPS-2) of PPS Resin Composition

To a feed section of a TEX30α twin-screw extruder (L/D = 30) manufactured by The Japan Steel Works Ltd., 60 parts by weight of PPS-1 was added, and 40 parts by weight of glass fibers (T-747H manufactured by Nippon Electric Glass Co., Ltd., average fiber diameter: 10.5 µm) was further added from a side feeder of the twin-screw extruder, followed by melt-kneading under the conditions of 320°C and 200 rpm. The resultant was pelletized to a length of 10 mm or less using a strand cutter, and then dried at 120°C to obtain a PPS resin composition. The thus obtained PPS resin composition was injection-molded using an injection molding machine SE75DUZ-C250 manufactured by Sumitomo Heavy Industries, Ltd. at a resin temperature of 310°C and a mold temperature of 130°C, whereby an ISO (1A) dumbbell molded article (PPS-2) was produced.

### [Example 1]

An apparatus constituted by a 1-L autoclave equipped with a bottom stop valve and a nitrogen-pressurizable high-temperature filtration device (using a PTFE filter having a pore size of 1 µm) directly connected to below the bottom stop valve was prepared. To the autoclave, 10 g of PPS-2 and 300 g of NMP (the weight of PPS was 20 g per 1 kg of this polar organic solvent) were added, and the autoclave was purged with nitrogen, heated to 250°C over a period of 60 minutes, and then maintained for 60 minutes to obtain a PPS solution (A) (step 1). Subsequently, the bottom stop valve of the autoclave was opened to transfer the PPS solution (A) to the high-temperature filtration device at 250°C, and this high-temperature filtration device was pressurized with nitrogen to 0.2 MPa to perform pressurized filtration in a 250°C non-oxidizing atmosphere to separate a PPS solution (B) and the glass fibers (step 2). The thus obtained PAS solution (B) was cooled to 75°C to allow deposition of PPS (step 3). Thereafter, this PPS was added to 5L of ion exchanged water and then filtered through a filter having a pore size of 10 to 16 µm. The thus obtained cake was subjected to the same washing with water and subsequent filtration three times at 75°C and then dried at 120°C, whereby a recovered PPS was obtained. The recovery ratio was determined from the weight of this recovered PPS and the weight of PPS in the added PPS-2. Further, the weight average molecular weight of the recovered PPS and the amount of gas generated were determined by the above-described respective methods.

### [Examples 2 to 9]

A recovered PPS was obtained by the same operations as in Example 1, except that the weight of PPS per 1 kg of the polar organic solvent and the deposition temperature in the step 3 were changed.

### [Comparative Example 1] (Method Disclosed in Patent Literature 3)

The steps 1 and 2 were performed in the same manner as in Example 1, except that 300 g of 1-chloronaphthalene (1-CN) was used as a solvent in place of the polar organic solvent. The thus obtained 250°C PPS solution (B) was put into 5 L of acetone to allow deposition of PPS, and then filtered through a filter having a pore size of 10 to 16 µm. The thus obtained cake was subjected to washing with 30°C acetone and subsequent filtration three times and then dried at 120°C, whereby a recovered PPS was obtained.

### [Comparative Example 2] (Method Disclosed in Patent Literature 3)

A recovered PPS was obtained by the same operations as in Comparative Example 1, except that the weight of PPS per 1 kg of the solvent was changed.

The conditions in Examples and Comparative Examples, and the properties of each recovered PPS are shown in Table 1.

**[Table 1]**

| | | | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|---|---|
| Raw Materials | PPS Resin Composition or Molded Article | Type | PPS-2 | PPS-2 | PPS-2 | PPS-2 | PPS-2 | PPS-2 | PPS-2 | PPS-2 | PPS-2 | PPS-2 | PPS-2 |
| | PPS Mw prior to the Dissolution | - | 42,000 | 42,000 | 42,000 | 42,000 | 42,000 | 42,000 | 42,000 | 42,000 | 42,000 | 42,000 | 42,000 |
| Step 1 | Polar Organic Solvent | Type | NMP | NMP | NMP | NMP | NMP | NMP | NMP | NMP | NMP | - | - |
| | | g | 300 | 300 | 300 | 300 | 300 | 300 | 300 | 300 | 300 | 300 | 300 |
| | PPS Weight per 1 kg of Polar Organic Solvent | g | 20 | 20 | 50 | 100 | 100 | 100 | 100 | 100 | 100 | - | - |
| | Heating Temperature | °C | 250 | 250 | 250 | 250 | 250 | 250 | 250 | 250 | 250 | 250 | 250 |
| Step 2 | Solid-Liquid Separation Temperature | °C | 250 | 250 | 250 | 250 | 250 | 250 | 250 | 250 | 250 | 250 | 250 |
| Step 3 | Polar Organic Solvent | Type | NMP | NMP | NMP | NMP | NMP | NMP | NMP | NMP | NMP | Acetone | Acetone |
| | Deposition Temperature | °C | 75 | 150 | 150 | 20 | 50 | 75 | 100 | 150 | 200 | 250 | 250 |
| Step 4 | Solid-Liquid Separation Temperature | °C | 75 | 150 | 150 | 20 | 50 | 75 | 100 | 150 | 200 | - | - |
| Recovered PPS | Recovery Ratio | % | 96 | 94 | 94 | 99 | 97 | 95 | 93 | 93 | 85 | 90 | 90 |
| | Mw | - | 42,000 | 42,000 | 42,000 | 42,000 | 42,000 | 42,000 | 42,000 | 42,000 | 42,000 | 42,000 | 42,000 |
| | Amount of Generated Gas | % | 0.45 | 0.23 | 0.23 | 0.56 | 0.53 | 0.50 | 0.25 | 0.23 | 0.21 | 0.25 | 0.23 |
| ^{Note)} In Comparative Examples 1 and 2, 1-chloronaphthalene was used instead of organic polar solvent. | | | | | | | | | | | | | |

The following is apparent from the comparison between Examples and Comparative Examples shown in Table 1 above.

It is seen from Example 1 that, by dissolving a PPS resin composition in a polar organic solvent NMP and filtering the resulting solution under a high-temperature condition, a PAS having the same Mw as before the dissolution can be recovered. Further, since the polar organic solvent is soluble in water, not only the PAS can be recovered in a simple manner but also the loss during the recovery is small, so that the PAS can be obtained at a high recovery ratio. On the other hand, as seen from Comparative Example 1, when a PAS is dissolved in a water-insoluble solvent such as 1-chloronaphthalene that is not a polar organic solvent, it is necessary to remove 1-chloronaphthalene with an organic solvent such as acetone at the time of recovering the PAS, and this causes the PAS to be partially dissolved and removed, as a result of which the recovery ratio of the PAS is reduced. In addition, the amount of the organic solvent to be used is greater than that in Example 1, and this is clearly disadvantageous in terms of LCA.

Moreover, in Examples 4 to 9, although the PPS recovery ratio is reduced by changing the deposition temperature in step 3, since oligomer components of PAS, which cause generation of gas and contamination of a mold during melt processing, can be dissolved in a polar organic solvent and removed, the weight reduction rate of the recovered PPS can be reduced in the same manner as in Comparative Example 2. As long as the recovery ratio and the quality of recovered PAS are equivalent between Examples and Comparative Examples, the method of Examples that is superior in terms of LCA is an effective separation method.

### [Reference Example 3] Preparation of PPS-3

To a 70-L autoclave equipped with a stirrer and a bottom stop valve, 8.27 kg (70.00 mol) of 47.5% sodium hydrosulfide, 2.94 kg (70.63 mol) of 96% sodium hydroxide, 11.45 kg (115.50 mol) of N-methyl-2-pyrrolidone (NMP), 2.24 kg (27.3 mol) of sodium acetate, and 5.50 kg of ion exchanged water were added, and these materials were slowly heated to 245°C over a period of about 3 hours under normal pressure in a nitrogen stream. After 9.77 kg of water and 0.28 kg of NMP were removed by distillation, the reaction vessel was cooled to 200°C. The amount of water remaining in the system per 1 mol of the added alkali metal sulfide was 1.06 mol, including the amount of water consumed by hydrolysis of NMP. In addition, the amount of dispersed hydrogen sulfide was 0.02 mol per 1 mol of the added alkali metal sulfide.

Subsequently, the system was cooled to 200°C, and 10.32 kg (70.20 mol) of p-dichlorobenzene and 9.37 kg (94.50 mol) of NMP were added, after which the reaction vessel was hermetically sealed under nitrogen gas and then heated from 200°C to 235°C at a rate of 0.8°C/min with stirring at 240 rpm to allow the materials to react at 235°C for 40 minutes. Next, the temperature was raised to 270°C at a rate of 0.8°C/min, and the reaction was allowed to proceed at 270°C for 70 minutes, followed by injection of 2.40 kg (133 mol) of water while cooling the reaction vessel from 270°C to 250°C over a period of 15 minutes. Thereafter, the reaction vessel was slowly cooled from 250°C to 220°C over a period of 75 minutes and then rapidly cooled to about room temperature, and the contents were taken out.

The contents were diluted with about 35 L of NMP to prepare a slurry, and this slurry was stirred at 85°C for 30 minutes and then filtered through an 80-mesh wire net (mesh size: 0.175 mm) to obtain a solid. The thus obtained solid was washed with about 35 L of NMP and filtered in the same manner. A series of operations in which the thus obtained solid was diluted with 70 L of ion exchanged water and the resultant is stirred at 70°C for 30 minutes and then filtered through an 80-mesh wire net to recover a solid was repeated for a total of three times. This solid and 32 g of acetic acid were diluted with 70 L of ion exchanged water, and the resultant was stirred at 70°C for 30 minutes and then filtered through an 80-mesh wire net, after which the resulting solid was further diluted with 70 L of ion exchanged water, and the resultant was stirred at 70°C for 30 minutes and then filtered through an 80-mesh wire net to recover a solid. The solid obtained in this manner was dried at 120°C under a nitrogen stream, whereby a dry PPS (PPS-3) having a weight average molecular weight of 73,000 was obtained.

### [Reference Example 4] Molded Article (PPS-4) of PPS Resin Composition

An ASTM #1 dumbbell molded article (PPS-4) was produced in the same manner as PPS-2, except that PPS-3 was used in place of PPS-1.

### [Example 10]

An apparatus constituted by a 1-L autoclave equipped with a bottom stop valve and a nitrogen-pressurizable high-temperature filtration device (using a PTFE filter having a pore size of 1 µm) directly connected to below the bottom stop valve was prepared. To the autoclave, 50 g of PPS-4 and 300 g of NMP (the weight of PPS was 100 g per 1 kg of this polar organic solvent) were added, and the autoclave was purged with nitrogen, heated to 250°C, and then maintained for 1 hour to obtain a PPS solution (A) (step 1). Subsequently, the bottom stop valve of the autoclave was opened to transfer the PPS solution (A) to the high-temperature filtration device at 250°C, and this high-temperature filtration device was pressurized with nitrogen to 0.2 MPa to perform pressurized filtration in a 250°C non-oxidizing atmosphere to separate a PPS solution (B) and glass fibers (step 2). The thus obtained PAS solution (B) was cooled to 150°C to allow deposition of PPS (step 3). Thereafter, this PPS was added to 5L of ion exchanged water and then filtered through a filter having a pore size of 10 to 16 µm. The thus obtained cake was subjected to the same washing with water and subsequent filtration three times at 75°C and then dried at 120°C, whereby a recovered PPS was obtained. The recovery ratio was determined from the weight of this recovered PPS and the weight of PPS in the added PPS-2. In addition, the weight average molecular weight and the weight reduction rate of the recovered PPS were determined by the above-described respective methods. Further, in order to analyze the weight average molecular weight of PPS after the step 1, the weight average molecular weight of the PAS solution (A) that was transferred without solid-liquid separation in the step 2 by not using the PTFE filter in the high-temperature filtration device was measured.

### [Example 11]

A recovered PPS was obtained by the same operations as in Example 10, except that the heating temperature in the step 1 was changed to 280°C.

### [Example 12]

A recovered PPS was obtained by the same operations as in Example 10, except that PPS-4 was added to the TEX30α twin-screw extruder (L/D = 30) manufactured by The Japan Steel Works Ltd. before the step 1, and a strand obtained by melt-kneading under the conditions of 320°C and 200 rpm was rapidly cooled in a water cooling bath and then pelletized to a length of 10 mm or less using a strand cutter.

### [Example 13]

A recovered PPS was obtained by the same operations as in Example 10, except that, in addition to PPS-4 and NMP, 0.73 g of a compound, which was prepared in advance by heating 114.0 g of 48 weight % sodium hydrosulfide (NaSH), 39.8 g of NaOH, and 163.6 g of NMP to 120°C or higher and allowing these materials to react each other, was incorporated into the raw materials added in the step 1.

The conditions in Examples and the properties of each recovered PPS are shown in Table 2.

**[Table 2]**

| | | | Example 8 | Example 10 | Example 11 | Example 12 | Example 13 |
|---|---|---|---|---|---|---|---|
| Raw Materials | PPS Resin Composition or Molded Article | Type | PPS-2 | PPS-4 | PPS-4 | PPS-4 | PPS-4 |
| | PPS Mw prior to the Dissolution | - | 42,000 | 73,000 | 73,000 | 73,000 | 73,000 |
| | PPS Crystallinity prior to the Dissolution | % | 27 | 25 | 25 | 9 | 25 |
| Step 1 | Polar Organic Solvent | Type | NMP | NMP | NMP | NMP | NMP |
| | | g | 300 | 300 | 300 | 300 | 300 |
| | PPS Weight per 1 kg of Polar Organic Solvent | g | 100 | 100 | 100 | 100 | 100 |
| | Sulfur Component Additive Amount per 1mol of PPS | mol% | - | - | - | - | 1.0 |
| | Heating Temperature | °C | 250 | 250 | 280 | 250 | 250 |
| | PPS Mw after Step 1 | | - | 73000 | 73000 | 73000 | 42000 |
| Step 2 | Solid-Liquid Separation Temperature | °C | 250 | 250 | 280 | 250 | 250 |
| Step 3 | Polar Organic Solvent | Type | NMP | NMP | NMP | NMP | NMP |
| | Deposition Temperature | °C | 150 | 150 | 150 | 150 | 150 |
| Step 4 | Solid-Liquid Separation Temperature | °C | 150 | 150 | 150 | 150 | 150 |
| Recovered PPS | Recovery Ratio | % | 93 | 85 | 96 | 90 | 91 |
| | Mw | - | 42,000 | 58,000 | 73,000 | 62,000 | 42,000 |
| | Amount of Generated Gas | % | 0.23 | 0.23 | 0.23 | 0.23 | 0.26 |

The following is apparent from the comparison of Examples shown in Table 2 above.

From the comparison between Examples 8 and 10, it is seen that an increase in the weight average molecular weight of PPS in a PPS resin composition or molded article leads to a reduction in the recovery ratio of recovered PPS, causing a high-molecular-weight PPS, which does not dissolve in a polar organic solvent under the dissolution conditions of the step 1 and is separated as a solid in the step 2, to exist. It is seen that, for improvement of the recovery ratio, it is effective to raise the heating temperature in the step 1 as demonstrated in Example 11, to reduce the degree of crystallinity of PPS as demonstrated in Example 12, and to add a sulfur compound and thereby reduce the molecular weight of PPS in the step 1 as demonstrated in Example 13.

### [Example 14]

To a 300-L pressure-resistant vessel (I) equipped with a stirrer and a circulation line (I) provided with a pump, 33.5 kg of PPS-2 and 200 kg of NMP (the weight of PPS was 100 g per 1 kg of this polar organic solvent) were added, and the vessel was purged with nitrogen. To a 70-L pressure-resistant vessel (II) equipped with a stirring line and a circulation line (II) provided with a pump, 20 kg of NMP was added, and the vessel was purged with nitrogen.

It is noted here that a branch line (I) was connected to the circulation line (I) via a valve, and the pressure-resistant vessel (I) and the pressure-resistant vessel (II) were connected to the respective ends of this branch. In addition, a branch line (II) was connected to the circulation line (II) via a valve, and the pressure-resistant vessel (II) and a high-temperature filtration device (using a PTFE filter having a pore size of 1 µm) were connected to the respective ends of this branch. A branch line (III) was arranged in the inlet section of the high-temperature filtration device, enabling to perform supply to the filtration device and extraction to other vessel. Further, a vessel (III) was connected to the outlet of the filtration device.

The temperature of the pressure-resistant vessel (I) was controlled at 50°C, while the temperature of the pressure-resistant vessel (II) was controlled at 250°C. Subsequently, the contents of the pressure-resistant vessel (I) were continuously supplied to the pressure-resistant vessel (II) at a rate of 40 kg/hr. Simultaneously, the contents of the pressure-resistant vessel (II) were continuously extracted at a rate of 40 kg/hr. By these operations, a PAS solution (A) was obtained inside the pressure-resistant vessel (II) (step 1). During these operations, the pressure in the pressure-resistant vessel (II) was constant at about 0.2 MPa. It is noted here that, since the amount of the supply to the pressure-resistant vessel (II) and the amount of the extraction were constant, the amount of the contents in the pressure-resistant vessel (II) is said to be constant during the operations, and the retention time of the contents in the pressure-resistant vessel (II), i.e. the heating retention time of the PAS solution (A), was 30 minutes.

After a lapse of 4 hours from the start of the above operations, once the PAS solution (A) was sufficiently substituted and a steady operation was established, the PAS solution (A) was supplied from the branch line (III) to the high-temperature filtration device, and a PPS solution (B) and glass fibers were separated (step 2), whereby a PAS solution (B) was obtained. The thus obtained PAS solution (B) was cooled to 150°C to allow deposition of PPS (step 3). Thereafter, this PPS was added to ion exchanged water and then filtered through a filter having a pore size of 10 to 16 µm. The thus obtained cake was subjected to the same washing with water and subsequent filtration three times at 75°C and then dried at 120°C, whereby a recovered PPS was obtained. The recovery ratio was determined from the weight of this recovered PPS and the weight of PPS in the added PPS-2. Further, the weight average molecular weight of the recovered PPS and the amount of gas generated were determined by the above-described respective methods.

The conditions in Examples and the properties of each recovered PPS are shown in Table 3.

**[Table 3]**

| | | | Example 8 | Example 14 |
|---|---|---|---|---|
| Raw Materials | PPS Resin Composition or Molded Article | Type | PPS-2 | PPS-2 |
| | PPS Mw prior to the Dissolution | - | 42,000 | 42,000 |
| Step 1 | Polar Organic Solvent | Type | NMP | NMP |
| | | g | 300 | 300 |
| | PPS Weight per 1kg of Polar Organic Solvent | g | 100 | 100 |
| | Heating Temperature | °C | 250 | 250 |
| | Heatup Time | min | 60 | - |
| | Heating Time | min | 60 | 30 |
| Step 2 | Solid-Liquid Separation Temperature | °C | 250 | 250 |
| Step 3 | Polar Organic Solvent | Type | NMP | NMP |
| | Deposition Temperature | °C | 150 | 150 |
| Step 4 | Solid-Liquid Separation Temperature | °C | 150 | 150 |
| Recovered PPS | Recovery Ratio | % | 93 | 95 |
| | Mw | - | 42,000 | 42,000 |
| | Amount of Generated Gas | % | 0.23 | 0.24 |

In Example 14 where a continuous method was adopted, the recovery ratio and the amount of gas generated were equivalent as compared to Example 8 where a batchwise method was adopted. Further, as long as a steady operation is established, the heatup time and the heating time in the step 1 can be shortened, which is excellent in terms of both LCA and productivity.

### [Reference Example 5]

A resin part formed of a PPS resin composition was removed from an automobile metal insert component that was recovered after use in the market, and this resin part was coarsely crushed to a long-axis dimension of 100 mm or less using a crusher, washed with water, and then further crushed to a long-axis dimension of 10 mm or less, whereby a molded article (PPS-5) of the PPS resin composition, which had oil stains adhering thereto, was obtained.

As a result of analysis, it was found that the thus obtained PPS-5 was composed of 60 weight % of PPS and 40 weight % of GF, and this PPS had a weight average molecular weight of 45,000.

### [Reference Example 6]

A resin part formed of a PPS resin composition was removed from a residential water-related component that was recovered after use in the market, and this resin part was subsequently crushed to a long-axis dimension of 10 mm or less and washed with water, whereby a molded article (PPS-6) of the PPS resin composition, which had rust adhering thereto, was obtained.

As a result of analysis, it was found that the thus obtained PPS-6 was composed of 65 weight % of PPS, 30 weight % of GF, and 5 weight % of an olefin copolymer resin, and this PPS had a weight average molecular weight of 50,000.

### [Reference Example 7]

Fibers formed of a PPS were recovered from a bag filter that was recovered after use in the market, and these fibers were washed with water, whereby PPS fibers (PPS-7) having soot and oil strains adhering thereto were obtained.

About 100% of the thus obtained PPS-7 was composed of the PPS, and this PPS had a weight average molecular weight of 55,000.

### [Examples 15 to 23]

A recovered PPS was obtained by the same operations as in Example 8, except that the type of the PPS resin composition or molded article and the deposition temperature in the step 3 were changed as shown in Table 4.

The conditions in these Examples and the properties of each recovered PPS are shown in Table 4.

**[Table 4]**

| | | | Example 8 | Example 15 | Example 16 | Example 17 | Example 18 | Example 19 | Example 20 | Example 21 | Example 22 | Example 23 |
|---|---|---|---|---|---|---|---|---|---|---|---|---|
| Raw Materials | PPS Resin Composition or Molded Article | Type | PPS-2 | PPS-5 | PPS-5 | PPS-5 | PPS-6 | PPS-6 | PPS-6 | PPS-7 | PPS-7 | PPS-7 |
| | PPS Mw prior to the Dissolution | - | 42,000 | 45,000 | 45,000 | 45,000 | 50,000 | 50,000 | 50,000 | 55,000 | 55,001 | 55,002 |
| Step 1 | Polar Organic Solvent | Type | NMP | NMP | NMP | NMP | NMP | NMP | NMP | NMP | NMP | NMP |
| | | g | 300 | 300 | 300 | 300 | 300 | 300 | 300 | 300 | 300 | 300 |
| | PPS Weight per 1kg of Polar Organic Solvent | g | 100 | 100 | 100 | 100 | 100 | 100 | 100 | 100 | 100 | 100 |
| | Heating Temperature | °C | 250 | 250 | 250 | 250 | 250 | 250 | 250 | 250 | 250 | 250 |
| | Heating Time | min | 60 | 60 | 60 | 60 | 60 | 60 | 60 | 60 | 60 | 60 |
| Step 2 | Solid-Liquid Separation Temperature | °C | 250 | 250 | 250 | 250 | 250 | 250 | 250 | 250 | 250 | 250 |
| Step 3 | Polar Organic Solvent | Type | NMP | NMP | NMP | NMP | NMP | NMP | NMP | NMP | NMP | NMP |
| | Deposition Temperature | °C | 150 | 50 | 100 | 150 | 50 | 100 | 150 | 50 | 100 | 150 |
| Step 4 | Solid-Liquid Separation Temperature | °C | 150 | 50 | 100 | 150 | 50 | 100 | 150 | 50 | 100 | 150 |
| Recovered PPS | Recovery Ratio | % | 93 | 98 | 95 | 93 | 98 | 94 | 92 | 98 | 93 | 91 |
| | Mw | - | 42,000 | 45,000 | 45,000 | 45,000 | 45,000 | 45,000 | 45,000 | 51,000 | 51,000 | 51,000 |
| | Amount of Generated Gas | % | 0.23 | 0.95 | 0.63 | 0.32 | 1.76 | 0.75 | 0.38 | 1.12 | 0.55 | 0.29 |

According to Table 4 above, the resin compositions or the molded articles that were recovered after use in the market had contaminants originating from oils, rust, and the like; however, a PPS was recovered at a high recovery ratio. In addition, as the deposition temperature in the step 3 was increased, the separability was improved, so that a high-quality PPS was obtained.

### [Example 24]

An ISO (1A) dumbbell molded article was produced by the same operations as in Reference Example 2 except that the PPS (PPS-8) recovered in Example 8 was used in place of PPS-1, and the mechanical properties of the thus obtained molded article were compared with those of PPS-2.

**[Table 5]**

| | | | Reference Example 2 | Example 24 |
|---|---|---|---|---|
| Raw Materials | PPS | Type | PPS-1 | PPS-8 |
| | Amount of Added PPS | Parts by Weight | 60 | 60 |
| | Amount of Added GF | Parts by Weight | 40 | 40 |
| Mechanical Properties | Tensile Strength | MPa | 175 | 170 |
| | Flexural Strength | MPa | 250 | 245 |
| | Impact Strength | kJ/m² | 9.9 | 10.3 |

It is seen that, since a PPS resin composition produced using a recovered PPS obtained in accordance with the present invention has a sufficient weight average molecular weight, the PPS resin composition, even without a treatment such as repolymerization, exhibits properties comparable to those of a PPS resin composition produced using an unused PPS.

### Industrial Applicability

As long as there is no problem in terms of LCA, a PAS recovered by the separation method of the present invention can also be recovered as a PAS having an increase molecular weight through repolymerization using a dihalogenated aromatic compound and a sulfide compound along with the recovered low-molecular-weight PAS as raw materials.

Further, an inorganic filler and an organic filler that are separated and recovered in the step 2 of the present invention can be recycled as fillers of various resin compositions.

As described above, according to the present invention, a PAS and compounding materials can be recovered from a PAS resin composition or a molded article thereof in a reasonable manner in terms of LCA.

## Claims

1. A method of separating a polyarylene sulfide (hereinafter, referred to as "PAS"), the method comprising performing the following steps 1 to 4:
step 1: the step of heating a PAS resin composition or a molded article thereof to a temperature of 200°C or higher and 400°C or lower in a polar organic solvent to dissolve the PAS and thereby obtain a PAS solution (A), wherein the polar organic solvent is NMP;
step 2: the step of separating the PAS solution (A) into a solid and a PAS solution (B) by solid-liquid separation;
step 3: the step of cooling the PAS solution (B) obtained in the step 2 to a temperature of 20°C or higher and 200°C or lower to allow deposition of the PAS; and
step 4: the step of performing solid-liquid separation of a mixture obtained in the step 3 to separate the PAS.

2. The method of separating a PAS according to claim 1, wherein the PAS resin composition or the molded article thereof in the step 1 comprises at least one selected from an inorganic filler and an organic filler.

3. The method of separating a PAS according to claim 1 or 2, wherein the molded article of the PAS resin composition in the step 1 is a molded article recovered after use as a product.

4. The method of separating a PAS according to any one of claims 1 to 3, wherein the deposition in the step 3 is performed at 50°C or higher and 150°C or lower.

5. The method of separating a PAS according to any one of claims 1 to 4, wherein the PAS contained in the PAS resin composition or the molded article thereof prior to the dissolution in the step 1 has a weight average molecular weight (hereinafter, referred to as "Mw") measured according to the method of the description of 10,000 or more and 60,000 or less.

6. The method of separating a PAS according to any one of claims 1 to 5, wherein the steps 1 to 4 are partially or entirely performed by a continuous method.

7. The method of separating a PAS according to any one of claims 1 to 6, wherein the Mw measured according to the method of the description of the PAS contained in the PAS resin composition or the molded article thereof prior to the dissolution in the step 1 is reduced to 10,000 or more and 60,000 or less in the step 1.

8. The method of separating a PAS according to claim 7, wherein a sulfur compound is added to the PAS solution (A) in the step 1.

9. The method of separating a PAS according to claim 8, wherein the sulfur compound is at least one compound selected from an alkali metal sulfide, an alkali metal hydrosulfide, and hydrogen sulfide.

10. The method of separating a PAS according to any one of claims 1 to 9, further comprising washing and recovering the separated PAS after the step 4.

11. A method of producing a PAS resin composition, using a PAS obtained by the method according to claim 10 as a raw material.

## Patentansprüche

1. Verfahren zum Abtrennen eines Polyarylensulfids (hierin nachfolgend als "PAS" bezeichnet), wobei das Verfahren das Durchführen der folgenden Schritte 1 bis 4 umfasst:
Schritt 1: den Schritt des Erhitzens einer PAS-Harzzusammensetzung oder eines Formteils daraus auf eine Temperatur von 200 °C oder höher und 400 °C oder niedriger in einem polaren organischen Lösungsmittel, um das PAS zu lösen und dadurch eine PAS-Lösung (A) zu erhalten, wobei das polare Lösungsmittel NMP ist;
Schritt 2: den Schritt des Trennens der PAS-Lösung (A) in einen Feststoff und eine PAS-Lösung (B) durch Fest-Flüssig-Trennung;
Schritt 3: den Schritt des Kühlens der in Schritt 2 erhaltenen PAS-Lösung (B) auf eine Temperatur von 20 °C oder höher und 200 °C oder niedriger, um eine Abscheidung des PAS zu ermöglichen; und
Schritt 4: den Schritt des Durchführens einer Fest-Flüssig-Trennung des in Schritt 3 erhaltenen Gemischs, um das PAS abzutrennen.

2. Verfahren zum Abtrennen eines PAS nach Anspruch 1, wobei die PAS-Harzzusammensetzung oder das Formteil daraus in Schritt 1 zumindest einen aus einem anorganischen Füllstoff und einem organischen Füllstoff umfasst.

3. Verfahren zum Abtrennen eines PAS nach Anspruch 1 oder 2, wobei das Formteil aus der PAS-Harzzusammensetzung in Schritt 1 ein Formteil ist, das nach der Verwendung als Produkt wiedergewonnen wird.

4. Verfahren zum Abtrennen eines PAS nach einem der Ansprüche 1 bis 3, wobei die Abscheidung in Schritt 3 bei 50 °C oder mehr und 150 °C oder weniger durchgeführt wird.

5. Verfahren zum Abtrennen eines PAS nach einem der Ansprüche 1 bis 4, wobei das in der PAS-Harzzusammensetzung oder dem Formteil daraus enthaltene PAS vor dem Lösen in Schritt 1 ein gemäß dem Verfahren der Beschreibung gemessenes gewichtsmittleres Molekulargewicht (hierin nachfolgend als "Mw" bezeichnet) von 10.000 oder mehr und 60.000 oder weniger aufweist.

6. Verfahren zum Abtrennen eines PAS nach einem der Ansprüche 1 bis 5, wobei die Schritte 1 bis 4 teilweise oder vollständig durch ein kontinuierliches Verfahren durchgeführt werden.

7. Verfahren zum Abtrennen eines PAS nach einem der Ansprüche 1 bis 6, wobei das gemäß dem Verfahren der Beschreibung gemessene Mw des in der PAS-Harzzusammensetzung oder dem Formteil daraus enthaltenen PAS vor dem Lösen in Schritt 1 auf 10.000 oder mehr und 60.000 oder weniger in Schritt 1 verringert wird.

8. Verfahren zum Abtrennen eines PAS nach Anspruch 7, wobei in Schritt 1 eine Schwefelverbindung zu der PAS-Lösung (A) zugesetzt wird.

9. Verfahren zum Abtrennen eines PAS nach Anspruch 8, wobei die Schwefelverbindung zumindest eine Verbindung, ausgewählt aus einem Alkalimetallsulfid, einem Alkalimetallhydrogensulfid und Schwefelwasserstoff ist.

10. Verfahren zum Abtrennen eines PAS nach einem der Ansprüche 1 bis 9, das weiters das Waschen und Gewinnen des abgetrennten PAS nach Schritt 4 umfasst.

11. Verfahren zur Herstellung einer PAS-Harzzusammensetzung unter Verwendung eines PAS, das durch ein Verfahren nach Anspruch 10 erhalten wurde, als Ausgangsmaterial.

## Revendications

1. Procédé de séparation d'un sulfure de polyarylène (ci-après dénommé « PAS »), le procédé comprenant la réalisation des étapes 1 à 4 suivantes :
étape 1 : l'étape consistant à chauffer une composition de résine de PAS ou un article moulé de celle-ci à une température de 200°C ou plus et de 400°C ou moins dans un solvant organique polaire pour dissoudre le PAS et obtenir ainsi une solution de PAS (A), dans lequel le solvant organique polaire est la NMP ;
étape 2 : l'étape consistant à séparer la solution de PAS (A) en un solide et une solution de PAS (B) par séparation solide-liquide ;
étape 3 : l'étape consistant à refroidir la solution de PAS (B) obtenue à l'étape 2 à une température de 20°C ou plus et de 200°C ou moins pour permettre un dépôt du PAS ; et
étape 4 : l'étape consistant à effectuer une séparation solide-liquide d'un mélange obtenu à l'étape 3 pour séparer le PAS.

2. Procédé de séparation d'un PAS selon la revendication 1, dans lequel la composition de résine de PAS ou l'article moulé de celle-ci dans l'étape 1 comprend au moins une choisie parmi une charge inorganique et une charge organique.

3. Procédé de séparation d'un PAS selon la revendication 1 ou 2, dans lequel l'article moulé de la composition de résine de PAS dans l'étape 1 est un article moulé récupéré après utilisation en tant que produit.

4. Procédé de séparation d'un PAS selon l'une quelconque des revendications 1 à 3, dans lequel le dépôt dans l'étape 3 est effectué à 50°C ou plus et 150°C ou moins.

5. Procédé de séparation d'un PAS selon l'une quelconque des revendications 1 à 4, dans lequel le PAS contenu dans la composition de résine de PAS ou l'article moulé de celle-ci avant la dissolution dans l'étape 1 présente un poids moléculaire moyen en poids (ci-après dénommé « Mw ») mesuré selon le procédé de la description de 10 000 ou plus et de 60 000 ou moins.

6. Procédé de séparation d'un PAS selon l'une quelconque des revendications 1 à 5, dans lequel les étapes 1 à 4 sont partiellement ou entièrement réalisées par un procédé continu.

7. Procédé de séparation d'un PAS selon l'une quelconque des revendications 1 à 6, dans lequel le Mw mesuré selon le procédé de la description du PAS contenu dans la composition de résine de PAS ou l'article moulé de celle-ci avant la dissolution dans l'étape 1 est réduit à 10 000 ou plus et 60 000 ou moins dans l'étape 1.

8. Procédé de séparation d'un PAS selon la revendication 7, dans lequel un composé de soufre est ajouté à la solution de PAS (A) dans l'étape 1.

9. Procédé de séparation d'un PAS selon la revendication 8, dans lequel le composé de soufre est au moins un composé choisi parmi un sulfure de métal alcalin, un hydrosulfure de métal alcalin et un sulfure d'hydrogène.

10. Procédé de séparation d'un PAS selon l'une quelconque des revendications 1 à 9, comprenant en outre un lavage et une récupération du PAS séparé après l'étape 4.

11. Procédé de production d'une composition de résine de PAS, utilisant un PAS obtenu par le procédé selon la revendication 10 comme matière première.
